# EUROPEAN PATENT SPECIFICATION

(11) **EP 1 122 996 B1**
(45) Date of publication and mention of the grant of the patent: **02.07.2003**
(21) Application number: 99951255.1
(22) Date of filing: 18.10.1999
(51) Int. Cl.: A01G 13/02

(54) **AGENT FOR COVERING A SOIL SURFACE**
MITTEL ZUR BODENFLÄCHEBEDECKUNG
AGENT PERMETTANT DE COUVRIR UN SOL

(30) Priority: 21.10.1998 NL 1010368
(43) Date of publication of application: 16.08.2001
(73) Proprietor: Lac Holding B.V., 4904 SK Oosterhout (NL)
(72) Inventor: ADRIAANSE, Cornelis, Theodorus, Jozef, Maria, NL-5076 GS Haaren (NL)
(74) Representative: Dohmen, Johannes Maria Gerardus
(86) International application number: NL9900648
(87) International publication number: WO00022916

(56) References cited:
- FR-A- 1 576 858
- NL-C- 1 002 374
- US-A- 4 297 810
- US-A- 4 705 816

## Description

The present invention relates to an agent for covering a soil surface, containing water, coal-black, a binding agent, a strengthening agent and fibres.

Such an agent is known from Netherlands Patent No. 1002374, and is used for preventing the growth of weeds. For this purpose, the known agent is applied in a fluid form on a soil from which weeds have been essentially removed and in which desirable ornamental plants or crop plants are already growing. A binding agent, for instance water glass, is present in order to keep the fluid form of the agent in a homogeneous state. By evaporation on the soil, the agent becomes solid, and prevents the growth of weeds, in that it, among other things, prevents the passage of light by the presence of coal-black, thereby inhibiting the photosynthesis of any germinating weeds. A strenghtening agent provides firmness to the dried form of the agent. The solid form of the agent is permeable to air and water. Such an agent is biodegradable and does not lead to environmental pollution.

Research by applicant has shown that the effectivity of the known agent is not fully satisfactory, as the known agent, applied to the soil, is too weak, particularly in a wet condition. As it is also insufficiently light-proof, it offers insufficient resistance to any germinating weeds. As in the known agent protein products are present for strengthening purposes, its storage life is limited and it furthermore causes inconvenience by its smell when it is being applied on the soil.

An agent which, in an evaporated condition, leads to a better covering layer with a higher firmness and flexibility can be obtained through the invention, which is characterised in that the agent contains a copolymer of at least one alkene and at least one ester of an alkenoic acid as strengthening agent.

U.S. Patent 4.705.816 relates to an agent containing a polymer, which forms a friable crust which is not continuous and which is readily broken by mechanical action. It generally provides a means for enhancing crop production. The agent can contain herbicides if the growth of weeds is to be prevented. If the agent has a dark colour, it helps the seeds to germinate faster by increasing the soil temperature. The agent does not contain any fibres. U.S. Patent 4.297.810 relates to an agent which is effective in reclaiming land, and which is particularly useful in planting seed. The agent does not contain a copolymer. Any coloring agents are used chiefly for esthetic purposes, in that they serve no mechanical or organic purpose in the composition. FR 1.576.858 relates to an agent which is pulverised on plants. The agent does not contain coal-black or fibres. It forms a mesh around plants, thereby protecting them against insects and other pests.

According to the invention, particularly good results were obtained when using an agent in which the copolymer is a copolymer of ethylene and vinyl acetate.

It was shown that the agent according to the invention when applied to the soil and dried, is more firm and flexible by the presence of the copolymer of ethylene and vinyl acetate, which results in the fact that it can be better walked upon. Obviously, an increased walkability is desirable, as it is then for instance easier to walk on the treated soil, in order to take care of the aforementioned ornamental plants or crop plants. The agent according to the invention is also effective for a longer time. An additional advantage of the copolymer of ethylene and vinyl acetate is that it promotes the wet strenght.

Research carried out by applicant shows that it is preferable that the copolymer is present in an amount of 1-20 % by weight of the agent.

In order to maintain the agent during transport to the place of use, or in otherwise physically straining circumstances, it was shown that the presence of xanthane gum is preferable. Additional advantages of xanthane gum are that it has a thixotropic action and that it is a natural product. Particularly good results are obtained if xanthane gum is present as an auxiliary agent in an amount of 0.02-2 % by weight of the agent.

Cotton fibres are particularly convenient as fibres. Not only are they natural, biodegradable fibres, but they also have a good wet strength. Natural fibres such as cotton fibres are preferably present in the agent in an amount of 0.2-6 % by weight of the agent.

Not only do coconut fibres have the same favourable properties as do cotton fibres, but they also provide the advantage of providing a better binding of coal-black, so that the dried agent with coconut fibres is even less permeable to light. It is preferred that the agent also contains coconut fibres in an amount of 0.1-5 % by weight of the agent.

In order to further improve the wet strength of cotton fibres, which as such as already good, it is preferable that a product for improving the wet strength is present in an amount of 0.01-1 % by weight of the agent. An example of such an agent is a polyamidoamine/epichlorhydrin resin such as Cartabond(trademark).

A possible coagulation of the fibres in the agent can be countered by the presence of 0.05-5 % by weight of a surface active compound, for instance a polysorbate such as Tween 80(trademark).

The growth of any germinating weeds can be inhibited even more effectively by incorporation in the agent of a substance which makes the trace elements which are necessary for germination unavailable by chelation. For this purpose, it is preferable that the agent contains a chelating substance in an amount of 0.01-1 % by weight of the agent. An example of a chelating substance is EDTA or a salt form thereof.

It is preferable that the agent, applied to the soil and dried, has the lowest possible susceptibility to fire. Research from applicant surprisingly shows that a clear fire-resistant effect is provided by using potassium water glass as binding agent. The potassium water glass, which provides the fire-resistant properties, is preferably present in an amount of 0.3-30 % by weight of the agent.

In order to better ensure the necessary density of the agent, it is preferable that a filler is present in the agent, for instance a (potassium, magnesium, iron, aluminum)-silicate such as Mica 200(trademark). As a carrier for the pigment coal-black, and also as a filler, potato starch can be present. By the presence of a vegetable oil, such as for instance soy oil, the good wet strength of the cotton fibres can be further enhanced, and the color of the agent can also be intensified.

The present invention also relates to a process for preventing the growth of weeds, by covering a soil surface which contains practically no weeds, but in which desirable ornamental plants or crop plants are growing, with a fluid agent according to the invention, and then bringing the agent into a solid state by evaporation.

Preferably, the agent is applied to the soil using a spraying installation having a spraying pipe with at least two spraying nozzles with separate supply lines.

A useful spraying installation for spraying a fluid agent for covering a soil surface comprises a pump, an air compressor and a spraying pipe.

Such a spraying installation is also known from Netherlands Patent No. 1002374. Research by applicant shows that using the known spraying installation a spraying pattern is obtained which is insufficient to cover the soil with the agent.

A useful spraying installation has spraying pipe ending with a branching with at least two spray nozzles, which are separately connected with the pump and the air compressor.

In order to protect the spray nozzles against mechanical damage while applying the agent, it is preferable that the spray nozzles are protected by a device in the form of a cap which is connected to the spraying pipe. An additional advantage of this organ in the form of a cap is that, using said device, it is made possible to more or less push aside the existing planting of ornamental and/or crop plants while applying the agent, in order to apply the agent at the base of the plants without the agent noticably ending up on, for instance, the leaves of existing plants.

In the accompanying drawing, an example of the aforementioned useful spraying installation is illustrated. In a container (1) a fluid agent is present, which is fed in spraying pipe (4) using a pump (2) and an air compressor (3) in a manner which is known as such. The air is sucked in along the arrow (11a) and is fed to spray nozzles (6, 7) using the compressor (3). The air line indicated by arrow (11a) ends with a branching (5), the ends of which open into two spraying nozzles (6, 7). The agent is fed through spray nozzles (6, 7) via separate lines according to arrow (11b), using pump (2). The spray nozzles (6, 7) are each separately provided with feeding lines (9) for feeding air, and feeding lines (12) for feeding the agent. The spray nozzles can be protected by a device in the form of a can (8) which for instance consists of aluminium. When applying the agent on the soil, spraying pipe (4) can be moved with handles (10).

The present invention is further illustrated using the following examples.

### Examples.

### Example 1.

The following constituents were thoroughly mixed in the given order: water (90.8 % by weight), cotton fibres (2 % by weight), potassium water glass (3.4 % by weight), coal-black (0.2 % by weight) and copolymer of ethylene and vinyl acetate (3.6 % by weight).

Using a spraying installation, the darkly coloured agent was applied on a soil in which ornamental plants were growing, and from which weeds were practically removed. The agent was hardened by evaporation, and inhibited the growth of weeds during one year. The walkability of the agent was good, so that the ornamental plants could be treated during the course of the year.

### Example 2.

A fluid agent and contained the same constituents, was prepared as described in Example 1, except that the amount of water was 90.6 % by weight and that, prior to adding the copolymer, an amount of 0.2 % by weight of xanthene gum was mixed into the agent.

The thereby obtained agent could be maintained for a longer time, and also proved to be resistant to the mechanical influences of a lengthy transport to the place of use of the agent.

### Example 3.

A fluid agent was prepared by thoroughly mixing the following constituents: water (76.2 % by weight), coal-black (0.2 % by weight), cotton fibres (2.5 % by weight), xanthane gum (0.2 % by weight). EDTA-2 Na (0.1 % by weight), potassium water glass (3.4 % by weight), Tween 80(trademark) (0.5 % by weight), potato starch (2.4 % by weight), vegetable oil (0.9 % by weight) and finally a copolymer of ethylene and vinyl acetate (3.6 % by weight).

The thereby obtained agent was much darker than the agents according to Examples 1 and 2.

### Example 4.

A fluid agent was prepared by thoroughly mixing the following constituents: water (76.2 % by weight), coal-black (0.2 % by weight), cotton fibres (2.0 % by weight), coconut fibres (1.5 % by weight), xanthane gum (0.2 % by weight). EDTA-2 Na (0.1 % by weight), potassium water glass (3.4 % by weight), Mica-200(trademark) (0.2 % by weight) and finally copolymer of ethylene and vinyl acetate (3.6 % by weight).

The thereby obtained agent was much darker than the agents according to Examples 1 and 2.

### Example 5.

A fluid agent was prepared by thoroughly mixing the following constituents: water (78.9 % by weight), coal-black (0.2 % by weight), cotton fibres (2.0 % by weight), coconut fibres (1.5 % by weight), xanthane gum (0.2 % by weight). EDTA-2 Na (0.1 % by weight), potassium water glass (3.4 % by weight), Mica-200(trademark) (0.2 % by weight), Cartabound(trademark) (0.1 % by weight) and finally copolymer of ethylene and vinyl acetate (3.6 % by weight).

By the presence of the latter constituent, the natural fibres had a clearly higher wet strength.

## Claims

1. Agent for covering a soil surface, containing water, coal-black, a binding agent, a strengthening agent and fibres, **characterised in that** it contains a copolymer of at least one alkene and at least one ester of an alkenoic acid as strengthening agent.

2. Agent according to claim 1, **characterised in that** the copolymer is a copolymer of ethylene and vinyl acetate.

3. Agent according to claim 1 or claim 2, **characterised in that** the copolymer is present in an amount of 1-20 % by weight of the agent.

4. Agent according to any one of claims 1-3, **characterised in that** xanthane gum is present as an auxiliary agent, in an amount of 0.02-2 % by weight of the agent.

5. Agent according to any one of claims 1-4, **characterised in that** natural fibres, such as cotton fibres are present in the agent in an amount of 0.2-6 % by weight of the agent.

6. Agent according to any one of claims 1-5, **characterised in that** coconut fibres also present in an amount of 0.1-5 % by weight of the agent.

7. Agent according to any one of claims 1-6, **characterised in that** it contains a compound for enhancing the wet strength of the fibres in an amount of 0.01-1 % by weight of the agent.

8. Agent according to any one of claims 1-7, **characterised in that** it contains a surface active compound in an amount of 0.05-5 % by weight of the agent.

9. Agent according to any one of claims 1-8, **characterised in that** it contains a chelating compound in an amount of 0.01-1 % by weight of the agent.

10. Agent according to any one of claims 1-9, **characterised in that** potassium water glass is present as binding agent in an amount of 0.03-30 % by weight of the agent.

11. Agent according to any one of claims 1-8, **characterised in that** an auxiliary agent, belonging to the group consisting of potato starch, a vegetable oil, and/or a filling agent, is also present.

12. Process for preventing the growth of weeds, by covering a soil surface which contains practically no weeds, but in which desirable ornamental plants or crop plants are growing, with a fluid agent containing water, coal-black, a binding agent and fibres, and then bringing the agent into a solid state by evaporation, **characterised in that** the agent according to any one of claims 1-10 is used.

13. Process according to claim 12, **characterised in that** the agent is applied on the soil using a spraying installation having a spraying pipe with at least two spray nozzles with separated supply lines.

## Patentansprüche

1. Mittel zur Bedeckung einer Bodenfläche, das Wasser, Russ, Bindemittel, Verstärkungsmittel und Fasern enthält, **dadurch gekennzeichnet, daß** es als Verstärkungsmittel ein Copolymer aus mindestens einem Alken und mindestens einem Ester einer Alkensäure enthält.

2. Mittel nach Anspruch 1, **dadurch gekennzeichnet, daß** das Copolymer ein Copolymer aus Ethylen und Vinylacetat ist.

3. Mittel nach Anspruch 1 oder Anspruch 2, **dadurch gekennzeichnet, daß** das Copolymer in einer Menge von 1 bis 20 Gew.-% des Mittels vorhanden ist.

4. Mittel nach einem der Ansprüche 1 bis 3, **dadurch gekennzeichnet, daß** Xanthangummi als Hilfsmittel in einer Menge von 0,02 bis 2 Gew.-% des Mittels vorhanden ist.

5. Mittel nach einem der Ansprüche 1 bis 4, **dadurch gekennzeichnet, daß** Naturfasern wie Baumwollfasern in dem Mittel in einer Menge von 0,2 bis 6 Gew.-% des Mittels vorhanden sind.

6. Mittel nach einem der Ansprüche 1 bis 5, **dadurch gekennzeichnet, daß** Kokosnußfasern ebenfalls in einer Menge von 0,1 bis 5 Gew.-% des Mittels vorhanden sind.

7. Mittel nach einem der Ansprüche 1 bis 6, **dadurch gekennzeichnet, daß** es eine Verbindung zur Verbesserung der Naßfestigkeit der Fasern in einer Menge von 0,01 bis 1 Gew.-% des Mittels enthält.

8. Mittel nach einem der Ansprüche 1 bis 7, **dadurch gekennzeichnet, daß** es eine Tensidverbindung in einer Menge von 0,05 bis 5 Gew.-% des Mittels enthält.

9. Mittel nach einem der Ansprüche 1 bis 8, **dadurch gekennzeichnet, daß** es eine chelatisierende Verbindung in einer Menge von 0,01 bis 1 Gew.-% des Mittels enthält.

10. Mittel nach einem der Ansprüche 1 bis 9, **dadurch gekennzeichnet, daß** Kaliumwasserglas als Bindemittel in einer Menge von 0,03 bis 30 Gew.-% des Mittels vorhanden ist.

11. Mittel nach einem der Ansprüche 1 bis 8, **dadurch gekennzeichnet, daß** auch ein Hilfsmittel, das zur Gruppe bestehend aus Kartoffelstärke, Pflanzenöl und/oder Füllmittel gehört, vorhanden ist.

12. Verfahren zur Verhinderung des Wachstums von Unkraut, bei dem eine Bodenfläche, die praktisch kein Unkraut enthält auf der aber wünschenswerterweise Zierpflanzen oder Erntepflanzen wachsen, mit einem flüssigen Mittel, das Wasser, Russ, Bindemittel und Fasern enthält, abgedeckt wird und dann das Mittel durch Verdampfung in einen festen Zustand überführt wird, **dadurch gekennzeichnet, daß** ein Mittel gemäß einem der Ansprüche 1 bis 10 verwendet wird.

13. Verfahren nach Anspruch 12, **dadurch gekennzeichnet, daß** das Mittel unter Verwendung einer Sprühvorrichtung mit einem Sprührohr mit mindestens zwei Sprühdüsen mit separaten Versorgungsleitungen auf den Boden aufgebracht wird.

## Revendications

1. Agent destiné à recouvrir une surface en terre, contenant de l'eau, du noir de fumée, un agent liant, un agent fortifiant et des fibres, **caractérisé par le fait qu'**il contient un copolymère d'au moins un alcène et au moins un ester d'acide alcénique tenant lieu d'agent fortifiant.

2. Agent conforme à la revendication 1, **caractérisé par le fait que** le copolymère est un copolymère d'éthylène et d'acétate de vinyle.

3. Agent conforme à la revendication 1 ou 2, **caractérisé par le fait que** le copolymère est présent dans une quantité de 1-20% du poids de l'agent.

4. Agent conforme à l'une des revendications 1 à 3, **caractérisé par le fait qu'**il contient de la gomme de xanthane comme agent auxiliaire, dans une proportion de 0,02-2 % du poids de l'agent.

5. Agent conforme à l'une des revendications 1 à 4, **caractérisé par le fait que** des fibres naturelles, comme des fibres de coton sont présentes dans l'agent, dans une proportion de 0,2-6 % du poids de l'agent.

6. Agent conforme à l'une des revendications 1 à 5, **caractérisé par le fait que** des fibres de noix de coco sont également présentes dans une proportion de 0,1-5 % du poids de l'agent.

7. Agent conforme à l'une des revendications 1 à 6, **caractérisé par le fait qu'**il contient un composé destiné à améliorer la résistance à l'état humide des fibres, dans une proportion de 0,01-1 % du poids de l'agent.

8. Agent conforme à l'une des revendications 1 à 7, **caractérisé par le fait qu'**il contient un composé tensio-actif dans une proportion de 0,05-5 % du poids de l'agent.

9. Agent conforme à l'une des revendications 1 à 8, **caractérisé par le fait qu'**il contient un composé chélatant dans une proportion de 0,01-1 % du poids de l'agent.

10. Agent conforme à l'une des revendications 1 à 9, **caractérisé par** la présence de silicate de potassium en tant qu'agent liant, dans une proportion de 0,03 à 30 % du poids de l'agent.

11. Agent conforme à l'une des revendications 1 à 8, **caractérisé par le fait qu'**un agent auxiliaire, appartenant au groupe composé de l'amidon de pomme de terre, de l'huile végétale, et /ou d'un agent de remplissage, est également présent.

12. Procédé utilisé pour empêcher la pousse des mauvaises herbes, en recouvrant une surface de terre pratiquement dépourvue de mauvaises herbes, mais dans laquelle poussent des plantes d'ornement ou des plantes cultivées, avec un agent fluide contenant de l'eau, du noir de fumée, un agent liant et des fibres, puis en permettant la solidification de l'agent par évaporation, **caractérisé par** l'utilisation de l'un des agents des revendications 1 à 10.

13. Procédé conforme à la revendication 12, **caractérisé par le fait que** l'agent est appliqué sur le sol à l'aide d'un dispositif de pulvérisation comportant une conduite de pulvérisation dotée d'au moins deux buses de pulvérisation avec lignes d'alimentation séparées.
